(19) **Europäisches Patentamt / European Patent Office / Office européen des brevets**

(11) **EP 1 860 787 B2**

(12) # NEW EUROPEAN PATENT SPECIFICATION
After opposition procedure

(45) Date of publication and mention
of the opposition decision:
**14.11.2012 Bulletin 2012/46**

(45) Mention of the grant of the patent:
**22.07.2009 Bulletin 2009/30**

(21) Application number: **06705667.1**

(22) Date of filing: **21.02.2006**

(51) Int Cl.:
**H04W 52/32** *(2009.01)*      **H04W 52/28** *(2009.01)*

(86) International application number:
**PCT/CN2006/000246**

(87) International publication number:
**WO 2006/089476 (31.08.2006 Gazette 2006/35)**

(54) **POWER CONTROL METHOD IN HIGH SPEED SHARED CONTROL CHANNEL**

LEISTUNGSREGELVERFAHREN IN EINEM SCHNELLEN GEMEINSAM BENUTZTEN STEUERKANAL

MÉTHODE DE CONTRÔLE DE PUISSANCE DANS UN CANAL PARTAGÉ DE CONTRÔLE HAUTE VITESSE

(84) Designated Contracting States:
**AT BE BG CH CY CZ DE DK EE ES FI FR GB GR HU IE IS IT LI LT LU LV MC NL PL PT RO SE SI SK TR**

(30) Priority: **24.02.2005 CN 200510008880**

(43) Date of publication of application:
**28.11.2007 Bulletin 2007/48**

(73) Proprietor: **Huawei Technologies Co., Ltd.
Longgang District, Shenzhen
Guangdong 518129 (CN)**

(72) Inventor: **LI, Rongqiang
Intellectual Property Department
Shenzhen, Guangdong Province 518129 (CN)**

(74) Representative: **Körber, Martin Hans et al
Mitscherlich & Partner
Patent- und Rechtsanwälte
Postfach 33 06 09
80066 München (DE)**

(56) References cited:
**EP-A- 1 313 334          EP-A- 1 326 350
EP-A- 1 467 500          WO-A-03/098836
CN-A- 1 420 704          CN-A- 1 431 838
US-A1- 2004 077 368**

Printed by Jouve, 75001 PARIS (FR)

EP 1 860 787 B2

**Description**

**Field of the Invention**

The present invention relates to a method for controlling power in a wireless communication system, and in particular, to a method for controlling power of a downlink high speed shared control channel.

**Background of the Invention**

High Speed Downlink Packet Access (HSDPA), as a high speed downlink data packet access technology, was introduced into the 3rd-Generation Partnership Project (3GPP) Release 5 in March 2002, in which data services are provided based on downlink shared channels. In theory, the highest rate exceeds 10 Mb/s. Therefore, the limitation in downlink capacity of a Code-Division Multiple Access (CDMA) system has been solved satisfactorily.

An HSDPA system mainly features that a short frame of 2 ms is employed; the Hybrid Automatic Repeat Request (HARQ) technology and Adaptive Modulation and Coding (AMC) technology are employed at the physical layer; a higher order modulation, 16 Quadrature Amplitude Modulation (QAM) is introduced to increase the spectrum utilization; and shared channels among User Equipments (UEs) are scheduled by code division and time division. The HARQ technology employs a Stop and Wait (SAW) protocol, which requires that the NodeB should obtain, after sending data to a UE, ACKnowledge (ACK) or Not ACKnowledge (NACK) information fed back by the UE, the ACK or NACK information indicating whether the data is received correctly, so as to determine whether to send the data again or send new data. The AMC technology requires that the UE should feed back a Channel Quality Indicator (CQI) measured in the downlink to determine a coding rate and transmission format of downlink HSDPA data at the NodeB.

A CDMA system implements a data transmission between a Universal Terrestrial Radio Access Network (UTRAN) and a UE by using an HSDPA downlink physical channel, i.e. a High Speed Shared Control Channel (HS-SCCH), a High Speed Physical Downlink Shared Channel (HS-PDSCH) and an associated downlink dedicated channel, and an HSDPA uplink physical channel, i.e. a High Speed-Dedicated Physical Control Channel (HS-DPCCH) and an associated uplink Dedicated Physical Channel (DPCH). The uplink HS-DPCCH carries fed-back ACK or NACK information indicating whether the data frames on the downlink HS-PDSCH are received correctly, or CQI information. In addition to carrying higher-layer signaling for HSDPA Radio Resource Control (RRC) connection establishment, maintenance and reconfiguration, the associated uplink DPCH may also be used to bear traffic. The HS-SCCH carries downlink signaling for demodulating the HS-PDSCH, which includes a channelization code of the HS-PDSCH, process ID, new data indicator, index of transport block size, incremental redundancy and constellation mapping mode, etc. The HS-PDSCH carries the data of the transport channel, High-Speed Downlink Shared Channel (HS-DSCH). After demodulating the data frames on the HS-PDSCH, the UE feeds back the ACK or NACK information to the NodeB, indicating whether the data frames are received correctly, and feeds back the CQI information to the NodeB according to a CQI feedback period and retransmission period.

Power control on the HS-SCCH is implemented by using a pilot power offset of the associated downlink dedicated channel. If pilot time slot power of the downlink dedicated channel is $Power_{DCH\_Pilot}$, and a power offset parameter of the HS-SCCH configured at a higher layer when the radio link is established or reconfigured is $PowerOffset_{HS-SCCH}$, the subframe time slot transmit power of the HS-SCCH will be $P_{HS-SCCH} = Power_{DCH\_Pilot} + PowerOffset_{HS-SCCH}$. The HS-SCCH is the source of HSDPA downlink data transmission, and the performance of HS-SCCH demodulation can be ensured only when requirements on the transmit power of the HS-SCCH are met sufficiently. Therefore, the priority of the HS-SCCH in power allocation should be higher than that of the HS-PDSCH.

The NodeB sends HS-SCCH and HS-PDSCH subframes of users to UEs by time division and code division. Each UE demodulates the HS-SCCHs of the air interface according to the HS-SCCH channelization code set assigned when the HS-DSCH link is established. Each UE has at most four HS-SCCH channelization code in a set. The NodeB selects one HS-SCCH channelization code from the set to send signaling for each subframe. The UE must demodulate the whole HS-SCCH channelization code set to identify the currently-used HS-SCCH. The UE and NodeB should follow the following principles.

If the UE does not detect any control information for itself in the current subframe, the UE will monitor all the HS-SCCHs in the HS-SCCH set in the next subframe. If the UE detects control information for itself, the UE only needs to monitor the same HS-SCCH in the next subframe. Upon detecting that the control information for itself is carried on an HS-SCCH, the UE starts to receive the HS-PDSCH(s). A determination as to whether ACK or NACK is carried in the first time slot of the uplink feedback channel HS-DPCCH is made by demodulating the data frames from the HS-PDSCH and performing CRC check on MAC-hs PDU data blocks. Also, a determination as to whether coding information of the CQI needs to be carried in the second and third time slots of the HS-DPCCH subframe according to the feedback period and retransmission period of the CQI determined when the HS-DSCH link is established or reconfigured.

The ACK/NACK information or CQI information carried on the HS-DPCCH in a compression mode is different from that in a non-compression mode. Therefore, an adjustment needs to be done as follows.

If a part of a subframe of the user downlink physical channel HS-SCCH or a part of a subframe of the relevant downlink physical channel HS-PDSCH overlaps a transmission gap of the downlink dedicated channel DPCH, the UE will not demodulate the corresponding subframe of the physical channel HS-SCCH or HS-PDSCHs. Therefore, no ACK or NACK information for the subframes will be fed back. If the UE determines that a part of an HS-DPCCH time slot for carrying the ACK/NACK information overlaps a transmission gap of the uplink DPCH, the UE will not send the ACK/ NACK information in the time slot. If the UE determines that a part of an HS-DPCCH time slot for carrying the CQI information overlaps a transmission gap of the uplink DPCH, the UE will not send the CQI information in the subframe. However, the UE needs to send a CQI value in other non-overlapping HS-DPCCH subframes to be retransmitted, the number of which is N_cqi_transmit-1. If a current HS-DPCCH subframe for the UE needs to carry the CQI information for reporting, while the time for measuring the signal-to-noise ratio of the three time slots to obtain the CQI value overlaps the downlink transmission gap entirely or partially, then the obtained receive signal-to-noise ratio of the HS-PDSCHs is not exact and the obtained CQI value can not be used. Therefore, the UE sets the CQI value for the HS-DPCCH subframe and the CQI values for the subsequent N_cqi_transmitl retransmitted subframes as Discontinuous Transmissions (DTXs), and sends them to the NodeB.

The NodeB demodulates the information carried on the HS-DPCCH according to a timing relation of the uplink HS-DPCCH, performs data scheduling and transmission format selection by using the CQI, and determines whether to send the data again or send new data according to the ACK /NACK.

EP1467500A2 discloses a radio communication control system which controls transmission power of a shared control channel for transmitting control signals to a plurality mobile stations in accordance with transmission power of a dedicated channel accompanying the shared control channel and communication quality of the shared control channel.

However, in the prior art, the following disadvantages exists in the power control on the downlink channels. Downlink transmit power of the HS-SCCH may be obtained from a power offset parameter of the HS-SCCH configured by a Serving Radio Network Controller (SRNC), but a fixed power offset parameter cannot meet requirements on the downlink transmit power of the HS-SCCH in different situations. For example, in different transmission situations, it is possible that requirements on the offset parameter of the HS-SCCH based on pilot transmit power of the associated downlink dedicated channel are different. When an HSDPA user moves to a soft handover area of an associated dedicated channel, because the associated dedicated channel obtains a gain in the soft handover area, the pilot power of the associated dedicated channel in an HSDPA serving cell is decreased, such that the offset parameter of the HS-SCCH based on the pilot transmit power of the associated downlink dedicated channel is relatively low. If the power control on the HS-SCCH is always configured and maintained by the SRNC, the SRNC will not be aware in advance of the power offset requirements in various complex environments, and reconfiguring parameters for a user frequently entering and leaving the soft handover area may aggregate the burdens on signaling processing and cause a long time delay.

Additionally, once the transmit power of the HS-SCCH becomes relatively low, the demodulation will not be performed correctly at the UE. At this point, even if very high power has been allocated to the corresponding data frame HS-PDSCH, the UE still cannot demodulate the data frame HS-PDSCH. Therefore, the data transmission rate is lowered, or even the data transmission cannot be performed. As a result, the QoS of the data transmission cannot be guaranteed for a user, and the transmit power of the system is wasted. Moreover, although the performance of the HS-SCCH demodulation is guaranteed under relatively high HS-SCCH transmit power, the power that can be used by the downlink data frame HS-PDSCH is correspondingly reduced, resulting in waste of the power and decrease of the system capacity.

## Summary of the Invention

It is an object of the present invention to provide a method for controlling power of a downlink HS-SCCH, to overcome a disadvantage in the prior art that the power of the downlink HS-SCCH cannot be controlled dynamically.

To solve the above problem, the invention discloses a method for controlling power of a downlink HS-SCCH, including:

determining performance of downlink HS-SCCH demodulation;

adjusting a transmit power offset parameter of the downlink HS-SCCH according to the performance of the downlink HS-SCCH demodulation; and

adjusting transmit power of the downlink HS-SCCH according to the adjusted power offset parameter of the downlink HS-SCCH.

Determining the performance of the downlink HS-SCCH demodulation is performed according to the number of ACKs or NACKs received by the NodeB, by counting the number of DTXs and the number of DTXs that are fed back though ACKs/NACKs are expected.

The method further includes screening the number of DTXs, wherein the number of received DTXs is subtracted by the number of DTXs due to time slot compression and the number of DTXs due to an unreasonable power setting for an uplink HS-DPCCH.

The number of compression patterns of a user downlink associated dedicated channel and compression patterns of a user uplink associated dedicated channel is subtracted by the number of DTXs due to the time slot compression.

The number of DTXs due to the unreasonable power setting of the uplink HS-DPCCH is determined according to performance of CQI demodulation.

Adjusting the power offset parameter includes increasing the power offset parameter or decreasing the power offset parameter.

The transmit power offset parameter of the downlink HS-SCCH is determined by a downlink transmit power offset value and a power offset adjustment value of the downlink HS-SCCH.

When the power offset parameter is to be increased, different thresholds for the number of DTXs counted in N HS-PDSCH data frames are set, and corresponding increasing power offset adjustment values are set according to the range of the thresholds.

When the power offset parameter is to be decreased, different thresholds for the screened number of DTXs counted after M HS-PDSCH data frames have been sent are set, and corresponding decreasing power offset adjustment values are determined according to the range of the thresholds.

A counter for counting the number of DTXs is reset periodically.

An adjustment step size of the increasing power offset adjustment value is greater than an adjustment step size of the decreasing power offset adjustment value.

In comparison with the prior art, the invention has the following advantages.

In the invention, a closed-loop adjustment of the transmit power can be performed effectively on the HSDPA downlink physical channel HS-SCCH. The transmit power of the HS-SCCH can be controlled effectively, whether a pilot power offset parameter of an associated dedicated channel with the HS-SCCH has been configured by the SRNC. Meanwhile, the situation in which no transmit power offset parameter of the HS-SCCH is configured by the SRNC can also be taken into account.

In the invention, a transmit power increasing process or a transmit power decreasing process is adaptively performed according to a lower or a higher transmit power of the downlink channel HS-SCCH. Therefore, the requirement on the performance of the HS-SCCH demodulation may be met in an effective way, the data transmission rate for a user may be ensured, and the downlink transmit power of the NodeB may be sufficiently utilized. These show that as a result of the adaptive closed-loop power control on the downlink channel HS-SCCH, the QoS of user data transmission can be guaranteed effectively, robustness and reliability of the system transmission can be improved, and the transmission capacity of the system can also be optimized.

## Brief Description of the Drawings

Figure 1 is a flow chart illustrating the basic principle of a method for controlling power of a downlink HS-SCCH according to the invention;

Figure 2 is a diagram showing a timing relation of transmitting and receiving data frames for an HSDPA user between a NodeB and a UE according to the invention;

Figure 3 is a flow chart of a method for controlling power of a downlink HS-SCCH according to a first embodiment of the invention; and

Figure 4 is a flow chart of the method for controlling power of a downlink HS-SCCH according to a second embodiment of the invention.

## Detailed Description of the Embodiments

According to the invention, a NodeB determines whether to increase or decrease a transmit power of an HS-SCCH in accordance with performance of the HS-SCCH demodulation by a UE. In a closed-loop power control on the HS-SCCH, because relatively low transmit power may deteriorate a transmission performance, an HS-SCCH with relatively low transmit power is assigned a higher priority, and will undergo a fast power adjustment according to a determined value of the performance of the UE's HS-SCCH demodulation calculated by the NodeB. An HS-SCCH with relatively high transmit power is assigned a relatively low priority, and will undergo a slow power adjustment according to a determined value of the performance of the UE's HS-SCCH demodulation calculated within a longer time by the NodeB. The demodulation performance is determined by demodulating the uplink HS-DPCCH by the NodeB to obtain information, such as ACK or NACK information and CQI information, carried on the uplink HS-DPCCH, and determining the performance of the downlink HS-SCCH by the NodeB according to the information. The above channel performance actually refers to whether the transmit power of the downlink HS-SCCH is suitable. The transmit power of the downlink HS-SCCH is mainly influenced by the power offset parameter. According to a transmit power offset value $PowerOffset_{HS\text{-}SCCH}$ of the user downlink HS-SCCH, a power offset adjustment value $\sigma$, and a pilot time slot power $Power_{DCH\_Pilot}$ of an associated dedicated channel, which are initially set, the NodeB determines the transmit power $P_{HS\text{-}SCCH}$ of the downlink HS-SCCH according to $P_{HS\text{-}SCCH} = Power_{DCH\_Pilot} + PowerOffset_{HS\text{-}SCCH} + \sigma$. $PowerOffset_{HS\text{-}SCCH}$ may be a parameter configured by the SRNC or an initial value set by the NodeB itself. If the power offset parameter is increased, the downlink transmit power of the HS-SCCH will be increased. If the power offset parameter is decreased, the downlink transmit power of the HS-SCCH will be reduced. Therefore, according to whether the transmit power of the downlink HS-SCCH is suitable, the power offset parameter adjustment value of the downlink HS-SCCH may be modified to increase or decrease the power offset parameter. Therefore, the transmit power of the downlink HS-SCCH may be adjusted dynamically.

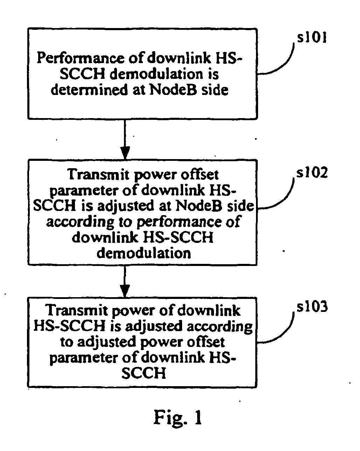

The principle of the invention will now be illustrated in conjunction with Figure 1.

Fist of all, in s101, the NodeB determines the performance of downlink HS-SCCH demodulation. After the NodeB sends an HS-PDSCH data frame to a UE, ACK/NACK information and CQI fed back by the UE should be received by the NodeB. By demodulating the uplink channel HS-DPCCH, the number of DTXs that are fed back though ACKs or NACKs are expected is counted. Therefore, the NodeB needs to perform a multi-path searching and a channel determination according to a pilot time slot in each time slot of the Dedicated Physical Control Channel (DPCCH). A transmitted signal propagated over the air may reach a receiver via multiple different paths. Therefore, a signal of the uplink HS-DPCCH sent by a UE to the NodeB may be propagated via multiple paths. For each path, the characteristics of the propagating channels, e.g. phase information and amplitude information, are different due to different propagating paths over the air. The NodeB needs to search these paths and obtain channel characteristic information of these paths. By using the multi-path information, de-spreading and de-scrambling of each path may be implemented for the HS-DPCCH. Then, a channel information parameter (e.g. the phase information and the amplitude information) of the HS-DPCCH corresponding to the multi-path is obtained through interpolation by using the channel characteristic information of each path. By using the channel information parameter, a channel correction is performed on the result of the de-spreading and de-scrambling of the multi-path, to eliminate influence of the propagating channel on the received signal. The demodulated information from each path is accumulated by maximum ratio combining to obtain the ACK or NACK information and CQI information by the HS-DPCCH demodulation.

For a UE, the HS-DPCCH is not continuous in time. Only when a data frame is sent to the UE on the HS-PDSCH, the UE will send a signal carrying ACK or NACK on the HS-DPCCH delayed by a time interval of m*256 chips relative to the uplink DPCCH. Otherwise, the UE will send a DTX signal. Valid demodulated ACK or NACK data may be selected according to such a time characteristic. HS-DPCCH information carrying the CQI is irrelevant to whether a data frame HS-PDSCH has been sent in the downlink. The UE may determine the time to send the HS-DPCCH information carrying the CQI according to a delay parameter m which meets the conditions. The NodeB may select valid demodulated CQI information on the HS-DPCCH according to the delay parameter m and a CQI sending rule. Therefore, demodulated ACK or NACK and CQI information carried on the uplink channel HS-DPCCH can be obtained by the NodeB.

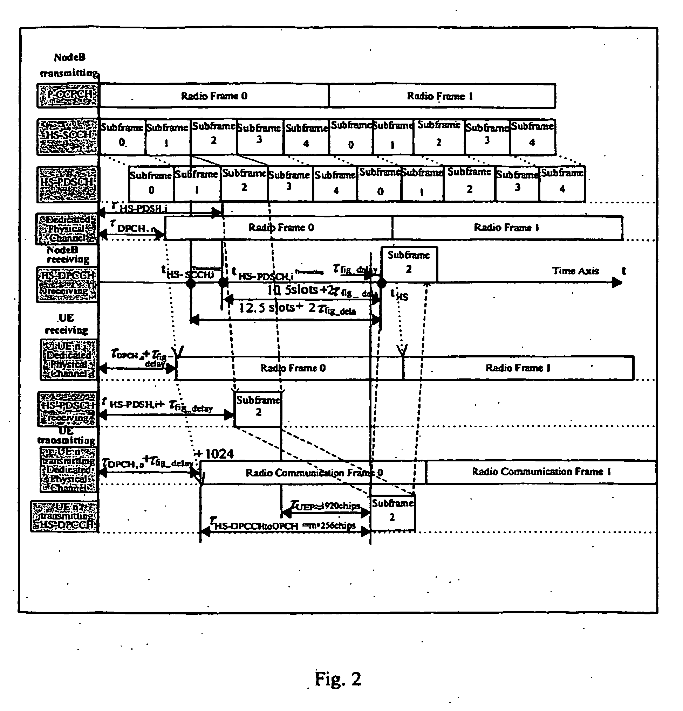

To illustrate the delay parameter m, a timing relation among several physical channels in HSDPA uplink and downlink will be described first. The UE and an UTRAN must conform to the timing relation among the physical channels. Otherwise, HS-DSCH data cannot be transmitted correctly. With reference to a starting position of each frame on a Primary Common Control Physical Channel (P-CCPCH), there are 5 starting positions of HS-SCCH subframes and HS-PDSCH subframes transmitted by the NodeB, which are denoted subframe 0, subframe 1, ..., and subframe 4 respectively, as shown in Figure 2, "the processes of transmitting and receiving between the NodeB and the UE for an HSDPA user". The frame length of the P-CCPCH is 10 ms, and the starting positions of HS-SCCH and HS-PDSCH subframes will periodically repeat, respectively, after 10 ms. The UE determines the time delay $\tau_{HS\text{-}PDSCH,i}$ of receiving the data frame HS-PDSCH relative to receiving the P-CCPCH by monitoring the time delay between the HS-SCCH subframe and the P-CCPCH subframe, and obtains the delay parameter m of transmitting the uplink feedback channel HS-DPCCH subframe relative to transmitting the uplink associated dedicated channel according to the time delay $\tau_{DPCH,n}$ of the downlink dedicated channel DPCH relative to the P-CCPCH that is configured at a higher layer when the RRC connection is established. When receiving a subframe of the uplink channel HS-DPCCH, the NodeB can demodulate the HS-DPCCH correctly when the corresponding delay parameter m is calculated according to the same delay parameter information; otherwise, if the delay parameters m calculated by the UE and NodeB for the same HS-DPCCH subframe relative to the associated uplink dedicated channel subframe are not identical, the HSDPA data transmission may not be carried out.

In Figure 2, the starting position of subframe 0 of the HSDPA shared control channel HS-SCCH is aligned with the starting position of a radio frame of the P-CCPCH; and the starting position of subframe i of the HS-PDSCH is delayed by 2 time slots relative to the starting position of subframe i of the HS-SCCH. The HS-SCCH signaling subframes and HS-PDSCH data subframes transmitted by the NodeB will conform to such a timing requirement.

The starting position of the HS-DPCCH transmitted by the UE in the uplink is delayed by m*256 chips relative to the starting position of the uplink DPCH transmitted by the UE, wherein m is calculated as follows: $m=(T_{Tx\_diff}/256)+101$, $T_{Tx\_diff}$ is the difference between the starting point of time $\tau_{HS\text{-}PDSCH,i}$ of HS-PDSCH subframe i transmitted by the NodeB in the downlink and the starting point of time $\tau_{DPCH,n}$ of the DPCH frame transmitted in the downlink containing the starting position of that subframe, i.e. $T_{Tx\_diff}=\tau_{HS\text{-}PDSCH,i}\ \tau_{DPCH,n}$. The point of time of feeding back ACK or NACK carried on the HS-DPCCH is independent of that of feeding back CQI carried on the HS-DPCCH. The feedback of ACK or NACK needs to follow the above formula for calculating m, and 5 subframe periods correspond to 5 possible parameters m respectively. For the feedback of CQI, according to the 5 possible values of parameter m of the HS-DSCH radio link, by using the feedback period k of CQI given in a RRC message when the HS-DSCH radio link is established or reconfigured as well as the Connection Frame Number (CFN) of the dedicated channel, the UE calculates a satisfactory m according to the following formula:

$$(5 \times CFN + \lceil m \times 256chips / 7680chips \rceil) \bmod(k / 2ms) = 0$$

For a delay parameter m that meets the above conditions, the UE may send the CQI in an HS-DPCCH subframe that is m*256 chips later than the associated uplink DPCH frame. If retransmission of ACK or NACK or CQI is concerned, the corresponding retransmission will be performed after the HS-DPCCH subframe according to the number of retransmission times configured at a higher layer. The UE will not send CQI on the HS-DPCCH in subframes other than the above subframe that meets the sending conditions.

The performance of HS-SCCH demodulation is determined by the performance of ACK or NACK demodulation and the performance of CQI demodulation. The number of received DTXs is counted after N HS-PDSCH data frames are sent, the DTXs due to compression time slot is marked as invalid and removed from the counted value of the number of DTXs according to the compression pattern of the user downlink associated dedicated channel and the compression pattern of the uplink associated dedicated channel, and the number of DTXs that are received though ACKs or NACKs are expected is counted, so as to determine the performance of the HS-SCCH demodulation. The compression pattern has a defined format recommended in the 3GPP protocol. An RNC informs the NodeB (base station) and the UE (mobile station) of the parameters about the definition of the compression pattern via signaling, indicating that in which continuous time slots data will not be transmitted. If the performance of the uplink channel HS-DPCCH demodulation meets the requirements, the ACK or NACK carried on the HS-DPCCH by the UE may be correctly demodulated by the NodeB, rather than being demodulated as a DTX in error. An exception is that the UE does not demodulate out the downlink HS-SCCH, in the case of which, no ACK or NACK information will be fed back via the uplink channel HS-DPCCH, and the NodeB cannot receive the information ACK or NACK fed back by the UE indicating whether an HS-PDSCH data frame is received correctly after the NodeB has sent the HS-PDSCH data frame; but a DTX value carrying no information is received. In such a case, after N HS-PDSCH data frames are sent, the greater the number of DTXs that are received though ACKs or NACKs are expected is, the worse the performance of the HS-SCCH demodulation will be, and therefore the downlink transmit power of the HS-SCCH needs to be raised. If the number of the received DTXs is very small or even equal to 0, it indicates that the performance of the HS-SCCH demodulation is better than the performance requirement, and therefore the downlink transmit power of the HS-SCCH may be lowered. These may be realized by raising or lowering the power offset value of the HS-SCCH. To ensure that the DTX value counted truly reflects the performance of the HS-SCCH demodulation, the situation in which the DTX value becomes relatively large due to the deviation of the performance of the uplink channel HS-DPCCH demodulation should be excluded. It may be determined by the performance of demodulation of the CQI carried in the uplink channel HS-DPCCH. Because the feedback of CQI is irrelevant to whether an HS-PDSCH data frame is sent, it may be determined whether the performance of the uplink feedback channel HS-DPCCH demodulation is abnormal by calculating the bit error rate of the CQI. Supposing the bit error rate calculating period of the CQI is $T_{Stat\_BER}$, the demodulated value of each CQI in the calculating period is counter-coded using a coding matrix, and the bit error rates of the counter-coded bits and the bits that are hard decided after demodulation are calculated. The bit error rates in a calculating period are averaged to obtain a statistical CQI bit error rate CQI_Stat_BER. Supposing the CQI bit error rate at normal HS-DPCCH transmit power is CQI_Standard_BER, if CQI_Stat_BER $\leq$ CQI_Standard_BER, it indicates that the transmit power of the HS-DPCCH is normal; otherwise, the transmit power of the HS-DPCCH is abnormal. At this point, although the number of DTXs detected by the NodeB is relatively large, no adjustment is performed on the downlink transmit power offset of the HS-SCCH; instead, a process to update the HS-DPCCH power offset parameter adjustment is initiated to the SRNC in a parameter updating process, and new power offset values for the ACK or NACk and CQI that meet the requirements are configured for the UE via a Uu port reconfiguration process of the SRNC.

In s102, the transmit power offset parameter of the downlink HS-SCCH is adjusted by the NodeB according to the performance of the downlink HS-SCCH demodulation. The adjustment of the power offset parameter includes: raising the power offset parameter or lowering the power offset parameter. When the power offset parameter adjustment value is to be raised, different thresholds for the number of DTXs counted in N HS-PDSCH data frames are set, which includes: a first threshold, a second threshold, ..., and a $n^{th}$ threshold, where the first threshold < the second threshold < ... < the $n^{th}$ threshold. Power offset adjustment values corresponding to the threshold ranges respectively are set as: $\Delta_1$, $\Delta_2$, ..., $\Delta_{n-1}$, where $\Delta_1 < \Delta_2 < ... < \Delta_{n-1}$. A power offset adjustment value corresponding to a threshold range is used according to the screened number of DTXs as counted.

When the power offset adjustment value is to be lowered, different thresholds are first set for the screened number of DTXs counted after M HS-PDSCH data frames are sent, including M1 threshold, M2 threshold, ..., and Mn threshold, where M1 threshold < M2 threshold < ... < Mn threshold. The lowering power offset adjustment values are $\delta_1$, $\delta_2$, ..., and $\delta_{n-1}$, where $\delta_1 > \delta_2 > ... > \delta_{n-1}$. When the screened number of DTXs as counted is less than M1 threshold, the lowering power offset adjustment value is $\delta_1$; when the screened number of DTXs as counted is greater than M1 threshold and less than M2 threshold, the lowering power offset adjustment value is $\delta_2$; and so on. For example, one threshold, M1 threshold, may be set. If the screened number of DTXs as counted is less than M1 threshold, the corresponding power offset adjustment value will be $\delta_1$; and if M1 threshold is less than the screened number of DTXs as counted, the corresponding power offset adjustment value will be 0. In another example, two thresholds, M1 threshold and M2 threshold, may be set. When the number of DTXs as counted is less than M1 threshold, the corresponding power offset adjustment value will be $\delta_1$; when M1 threshold < the screened number of DTXs as counted < M2 threshold, the corresponding power offset adjustment value will be $\delta_2$, where $\delta_1 > \delta_2$; and when M2 threshold is less than the screened number of DTXs as counted, the corresponding power offset adjustment value will be 0.

The power adjustment values are adjustable. The power adjustment values may be adjusted through link-level stimulation. In other words, numerical values are substituted step by step through stimulation, until the optimum value is determined. The adjustment when the power offset parameter is set relatively low is of greater importance than the adjustment when the power offset parameter is set relatively high, and the time as required is shorter. Therefore, the adjustment step size should be relatively large. The adjustment step size should be based on stability and reliability when the power offset parameter is set relatively high and the step size is mainly for fine adjustment.

In s103, the NodeB adjusts the transmit power of the downlink HS-SCCH directly according to the adjusted power offset parameter of the downlink HS-SCCH.

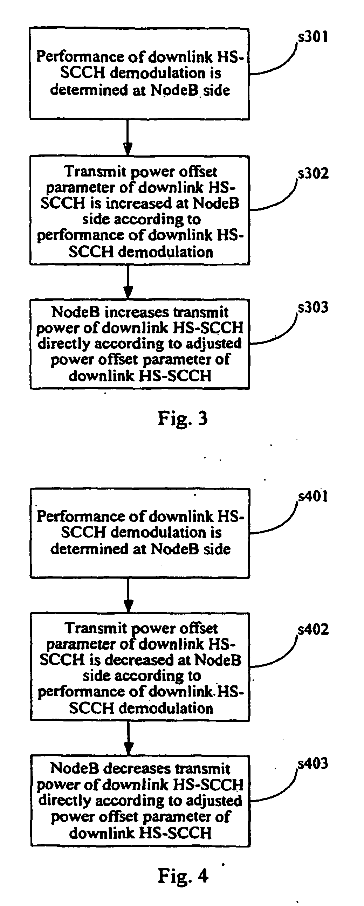

A first embodiment of the invention will now be illustrated with reference to Figure 3. In this embodiment, an instance in which a method for controlling the power of a downlink HS-SCCH is employed when the transmit power of the downlink HS-SCCH is relatively low will be illustrated.

Fist of all, in s301, the performance of downlink HS-SCCH demodulation is determined by the NodeB. After the NodeB sends an HS-PDSCH data frame in the downlink, the UE sends carried ACK or NACK information and CQI information meeting the sending conditions on the uplink HS-DPCCH delayed by a time interval of m*256 chips relative to the uplink DPCCH. The NodeB demodulates the uplink HS-DPCCH and obtains the carried ACK or NACK and CQI information. The number of DTXs that are fed back though ACKs or NACKs are expected is counted based on the information.

In s302, the transmit power offset parameter of the downlink HS-SCCH is increased at the NodeB according to the performance of the downlink HS-SCCH demodulation. According to the characteristic in the closed-loop power control on an HS-SCCH that fast adjustment is needed when the transmit power is relatively low, the number of received DTXs is counted after N HS-PDSCH data frames are sent, where the value of N should be set relatively small. According to different extent to which the transmit power is relatively low, different thresholds for the number of DTXs counted in N HS-PDSCH data frames and the relations among them are set as follows: $TH\_DTX\_NumInN_1 < TH\_DTX\_NumInN_2 < TH\_DTX\_NumInN_3 < TH\_DTX\_NumInN_4$; and the corresponding power offset adjustment values and the relations therebetween are: $\Delta_1 < \Delta_2 < \Delta_3$. The adjustment value $\Delta$ of the HS-SCCH downlink transmit power offset is determined using the number of DTXs as counted, $Stat\_DTX\_NumInN$. Selections are made according to the following principle: if $Stat\_DTX\_NumInN \leq TH\_DTX\_NumInN_1$, $\Delta=0$; if $TH\_DTX\_NumInN_1 < Stat\_DTX\_NumInN \leq TH\_DTX\_NumInN_2$, $\Delta=\Delta_1$; if $TH\_DTX\_NumInN_2 < Stat\_DTX\_NumInN \leq TH\_DTX\_NumInN_3$, $\Delta=\Delta_2$; and if $TH\_DTX\_NumInN_3 < Stat\_DTX\_NumInN \leq TH\_DTX\_NumInN_4$, $\Delta=\Delta_3$. If the HS-SCCH power offset adjustment value $\Delta$ is not equal to 0, the HS-SCCH power offset adjustment value will be $\Delta$, and the counter N for counting the number of DTXs is reset periodically.

In s303, the NodeB increases the transmit power of the downlink HS-SCCH directly according to the adjusted power offset parameter of the downlink HS-SCCH.

A second embodiment of the invention will now be illustrated with reference to Figure 4. In this embodiment, an instance in which a method for controlling the power of a downlink HS-SCCH is employed when the transmit power of the downlink HS-SCCH is relatively high will be illustrated.

Fist of all, in s401, the performance of downlink HS-SCCH demodulation is determined at the NodeB. After the NodeB sends an HS-PDSCH data frame in the downlink, the UE sends carried ACK or NACK information and CQI information meeting the sending conditions on the uplink HS-DPCCH delayed by a time interval of m*256 chips relative to the uplink DPCCH. The NodeB demodulates the uplink HS-DPCCH and obtains the carried ACK or NACK and CQI information. The number of DTXs that are fed back though ACKs or NACKs are expected is counted based on the information.

In s402, the transmit power offset parameter of the downlink HS-SCCH is lowered at the NodeB according to the performance of the downlink HS-SCCH demodulation. According to the characteristic in the closed-loop power control on an HS-SCCH that slow lowering is needed when the transmit power is relatively high, the number of received

# EP 1 860 787 B2

DTXs is counted after M (M=N*K HS-PDSCH) data frames are sent, where the value of M should be set relatively large. Because slow lowering is mainly employed when the transmit power is relatively high, the adjustment step size should be relatively small, and multiple lowering processes should be performed to achieve process equalization, so that the process may be prevented from being unstable due to a too large adjustment step size. Additionally, because the bit error rate in which the HS-SCCH cannot be demodulated in normal demodulation situations is very low, the statistical parameter M needs to be relatively large. Suppose the threshold for the number of DTXs counted in M HS-PDSCH data frames is TH_DTX_NumInM$_i$ and the corresponding power offset adjustment value is $\delta_1$. The adjustment value $\delta$ of HS-SCCH downlink transmit power offset is determined by using the number of DTXs counted as Stat_DTX_NumInM. Selections are made according to the following principle: if Stat_DTX_NumInM $\leq$ TH_DTX_NumInM$_1$, $\delta=\delta_1$; if TH_DTX_NumInM$_1$ < Stat_DTX_NumInM, $\delta=0$. If the fast power offset adjustment values $\Delta$ of K HS-SCCHs are all 0, the slow power offset adjustment values $\delta$ of the HS-SCCHs will be selected, and the HS-SCCH power offset adjustment value $\sigma=\delta$; otherwise, no adjustment will be made. At the same time, the counter M for counting the number of DTXs is reset periodically.

In s403: the NodeB lower the transmit power of the downlink HS-SCCH directly according to the adjusted power offset parameter of the downlink HS-SCCH.

The present invention has been described with reference to certain preferred embodiments in the above. Additional advantages and modifications will readily occur to those skilled in the art. Therefore, the invention in its broader aspects is not limited to the specific details and representative embodiments shown and described herein. Accordingly, various modifications and variations may be made without departing from the scope of the invention as defined by the appended claims and their equivalents.

## Claims

1.  A method for controlling power of a downlink High Speed Shared Control Channel, comprising:

    determining (s101, s301, s401), at a base station, performance of downlink High Speed Shared Control Channel demodulation by counting the number of Discontinue Transmissions that are fed back though Acknowledges or Not Acknowledges are expected;
    adjusting (s102), at the base station, a transmit power offset parameter of the downlink High Speed Shared Control Channel according to the performance of the downlink High Speed Shared Control Channel demodulation; and
    adjusting (s103, s303, s403) transmit power of the downlink High Speed Shared Control Channel according to the adjusted power offset parameter of the downlink High Speed Shared Control Channel.

2.  The method for controlling power of a downlink High Speed Shared Control Channel according to claim 1, wherein the number of compression patterns of a user downlink associated dedicated channel and compression patterns of a user uplink associated dedicated channel is subtracted by the number of Discontinue Transmissions due to the time slot compression.

3.  The method for controlling power of a downlink High Speed Shared Control Channel according to claim 1, wherein adjusting (s102) the power offset parameter comprises increasing the power offset parameter (s302) or decreasing the power offset parameter (s402).

4.  The method for controlling power of a downlink High Speed Shared Control Channel according to claim 3, wherein the transmit power offset parameter of the downlink High Speed Shared Control Channel is determined by a downlink transmit power offset value and a power offset adjustment value of the downlink High Speed Shared Control Channel.

5.  The method for controlling power of a downlink High Speed Shared Control Channel according to claim 3, wherein when the power offset parameter is to be increased (s302), different thresholds for the number of Discontinue Transmissions counted in N HS-PDSCH data frames are set, and corresponding increasing power offset adjustment values are set according to the range of the thresholds.

6.  The method for controlling power of a downlink High Speed Shared Control Channel according to claim 3, wherein when the power offset parameter is to be decreased (s402), different thresholds for the screened number of Discontinue Transmissions counted after M HS-PDSCH data frames have been sent are set, and corresponding decreasing power offset adjustment values are determined according to the range of the thresholds.

8

7.  The method for controlling power of a downlink High Speed Shared Control Channel according to any one of claims 3 to 6, wherein a counter for counting the number of Discontinue Transmissions is reset periodically.

8.  The method for controlling power of a downlink High Speed Shared Control Channel according to any one of claims 3 to 6, wherein an adjustment step size of the increasing power offset adjustment value is greater than an adjustment step size of the decreasing power offset adjustment value.


**Patentansprüche**

1.  Verfahren zum Steuern einer Leistung eines abwärtsgerichteten, gemeinsam genutzten Hochgeschwindigkeitssteuerungskanals, umfassend:

    Bestimmen (s101, s301, s401) der Funktionstüchtigkeit von der Demodulation des abwärtsgerichteten, gemeinsam genutzten Hochgeschwindigkeitskanals an einer Basisstation durch Zählen der Anzahl unterbrochener Übertragungen, die zurückgemeldet werden, obwohl Bestätigungen oder Nicht-Bestätigungen erwartet werden; Anpassen (s 102) eines Übertragungsleistungs-Offsetparameters des abwärtsgerichteten, gemeinsam genutzten Hochgeschwindigkeitssteuerungskanals an der Basisstation gemäß der Funktionstüchtigkeit der Demodulation des abwärtsgerichteten gemeinsam genutzten Hochgeschwindigkeitssteuerungskanals; und Anpassen (s103, s303, s403) der Übertragungsleistung des abwärtsgerichteten, gemeinsam genutzten Hochgeschwindigkeitssteuerungskanals gemäß dem angepassten Leistungs-Offsetparameter des abwärtsgerichteten, gemeinsam genutzten Hochgeschwindigkeitssteuerungskanals.

2.  Verfahren zum Steuern einer Leistung eines abwärtsgerichteten, gemeinsam genutzten Hochgeschwindigkeitssteuerungskanals nach Anspruch 1, wobei die Anzahl wegen Zeitfensterkompression unterbrochener Übertragungen von der Anzahl von Kompressionsmuster eines abwärtsgerichteten, einem Benutzer zugeordneten, dedizierten Kanals und Kompressionsmuster eines aufwärtsgerichteten, einem Benutzer zugeordneten, dedizierten Kanals abgezogen wird.

3.  Verfahren zum Steuern einer Leistung eines abwärtsgerichteten, gemeinsam genutzten Hochgeschwindigkeitssteuerungskanals nach Anspruch 1, wobei das Anpassen (s 102) des Leistungsoffsetparameters ein Erhöhen des Leistungsoffsetparameters (s302) oder ein Erniedrigen des Leistungsoffsetparameters (s402) umfasst.

4.  Verfahren zum Steuern einer Leistung eines abwärtsgerichteten, gemeinsam genutzten Hochgeschwindigkeitssteuerungskanals nach Anspruch 3, wobei der Übertragungsleistungsoffsetparameter des abwärtsgerichteten, gemeinsam genutzten Hochgeschwindigkeitssteuerungskanals durch einen abwärtsgerichteten Übertragungsleistungsoffsetwert und einen Leistungsoffsetanpassungswert des abwärtsgerichteten, gemeinsam genutzten Hochgeschwindigkeitssteuerungskanals bestimmt wird.

5.  Verfahren zum Steuern einer Leistung eines abwärtsgerichteten, gemeinsam genutzten Hochgeschwindigkeitssteuerungskanals nach Anspruch 3, wobei, wenn der Leistungsoffsetparameter erhöht werden soll (s302), unterschiedliche Schwellenwerte für die Anzahl unterbrochener Übertragungen, die in N HS-PDSCH Datenframes gezählt werden, und entsprechende zunehmende Leistungsoffsetanpassungswerte gemäß dem Bereich der Schwellenwerte festgelegt werden.

6.  Verfahren zum Steuern einer Leistung eines abwärtsgerichteten, gemeinsam genutzten Hochgeschwindigkeitssteuerungskanals nach Anspruch 3, wobei, wenn der Leistungsoffsetparameter erniedrigt werden soll (s402), unterschiedliche Schwellenwerte für die überwachte Anzahl unterbrochener Übertragungen, die, nachdem M HS-PDSCH Datenframes gesendet wurden, gezählt werden, festgelegt werden, und entsprechende abnehmende Leistungsoffsetanpassungswerte gemäß dem Bereich der Schwellenwerte bestimmt werden.

7.  Verfahren zum Steuern einer Leistung eines abwärtsgerichteten, gemeinsam genutzten Hochgeschwindigkeitssteuerungskanals nach einem der Ansprüche 3 bis 6, wobei ein Zähler zum Zählen der Anzahl unterbrochener Übertragungen periodisch zurückgesetzt wird.

8.  Verfahren zum Steuern einer Leistung eines abwärtsgerichteten, gemeinsam genutzten Hochgeschwindigkeitssteuerungskanals nach einem der Ansprüche 3 bis 6, wobei eine Anpassungsschrittgröße des zunehmenden Leistungsoffsetanpassungswertes größer als eine Anpassungsschrittgröße des abnehmenden Leistungsoffsetparameteranpassungswertes ist.

## Revendications

1. Procédé de commande de puissance d'un canal de commande partagé à haut débit en liaison descendante, comprenant, :

La détermination (s101, s301, s401), à la station de base, de la performance de la démodulation du canal de commande partagé à haut débit en liaison descendante en comptant le nombre de transmissions discontinues qui sont renvoyées bien que des accusés de réception ou accusés de non-réception soient attendus ;
L'ajustement (s102), à la station de base d'un paramètre de décalage de puissance de transmission du canal de commande partagé à haut débit en liaison descendante selon la performance de la démodulation du canal de commande partagé à haut débit en liaison descendante ; et
L'ajustement (s103, s303, s403) d'une puissance de transmission d'un canal de commande partagé à haut débit en liaison descendante selon le paramètre de décalage de puissance ajustée du canal de commande partagé à haut débit en liaison descendante.

2. Procédé de commande de puissance d'un canal de commande partagé à haut débit en liaison descendante selon la revendication 1, dans lequel le nombre de modèles de compression d'un canal dédié associé en liaison descendante d'un utilisateur et des modèles de compression d'un canal dédié associé en liaison ascendante d'un utilisateur est soustrait du nombre de transmissions discontinues dues à l'intervalle de temps de compression.

3. Procédé de commande de puissance d'un canal de commande partagé à haut débit en liaison descendante selon la revendication 1, dans lequel l'ajustement (s102) du paramètre de décalage de puissance comprend l'augmentation du paramètre (s302) de décalage de puissance ou la réduction du paramètre (s402) de décalage de puissance.

4. Procédé de commande de puissance d'un canal de commande partagé à haut débit en liaison descendante selon la revendication 3, dans lequel le paramètre de décalage de puissance de transmission du canal de commande partagé à haut débit en liaison descendante est déterminé par une valeur de décalage de puissance de transmission en liaison descendante et par une valeur de puissance d'ajustement de décalage du canal de commande partagé à haut débit en liaison descendante.

5. Procédé de commande de puissance d'un canal de commande partagé à haut débit en liaison descendante selon la revendication 3, dans lequel quand le paramètre de décalage de puissance doit être augmenté (s302), des seuils différents pour le nombre de transmission discontinues dénombrées dans les trames de données N HS-PDSCH sont définis, et dans lequel des valeurs d'ajustement de décalage de puissance croissantes correspondantes sont définies selon la plage des seuils.

6. Procédé de commande de puissance d'un canal de commande partagé à haut débit en liaison descendante selon la revendication 3, dans lequel quand le paramètre de décalage de puissance doit être réduit (s402), des seuils différents pour le nombre filtré de transmissions discontinues dénombrées après que les trames de données M HS-PDSCH ont été envoyées sont définis, et dans lequel des valeurs d'ajustement de décalage de puissance décroissantes correspondantes sont déterminées selon la plage des seuils.

7. Procédé de commande de puissance d'un canal de commande partagé à haut débit en liaison descendante selon l'une quelconque des revendications 3 à 6, dans lequel un compteur destiné à compter le nombre de transmissions discontinues est réinitialisé périodiquement.

8. Procédé de commande de puissance d'un canal de commande partagé à haut débit en liaison descendante selon l'une quelconque des revendications 3 à 6, dans lequel une taille de pas d'ajustement de la valeur d'ajustement de décalage de puissance croissante est supérieure à une taille de pas d'ajustement de la valeur d'ajustement de décalage de puissance décroissante.

```
┌─────────────────────────┐   s101
│  Performance of downlink HS-  │  ╱
│    SCCH demodulation is       │ ╱
│    determined at NodeB side   │
└─────────────────────────┘
             │
             ▼
┌─────────────────────────┐   s102
│    Transmit power offset      │  ╱
│  parameter of downlink HS-    │ ╱
│  SCCH is adjusted at NodeB side│
│    according to performance of │
│    downlink HS-SCCH           │
│      demodulation             │
└─────────────────────────┘
             │
             ▼
┌─────────────────────────┐   s103
│  Transmit power of downlink   │  ╱
│  HS-SCCH is adjusted according│ ╱
│    to adjusted power offset    │
│    parameter of downlink HS-  │
│         SCCH                  │
└─────────────────────────┘
```

Fig. 1

NodeB
transmitting

| P-CCPCH | Radio Frame 0 | Radio Frame 1 |

| HS-SCCH | Subframe 0 | Subframe 1 | Subframe 2 | Subframe 3 | Subframe 4 | Subframe 0 | Subframe 1 | Subframe 2 | Subframe 3 | Subframe 4 |

| HS-PDSCH | Subframe 0 | Subframe 1 | Subframe 2 | Subframe 3 | Subframe 4 | Subframe 0 | Subframe 1 | Subframe 2 | Subframe 3 | Subframe 4 |

$\tau_{HS-PDSH,i}$

| Dedicated Physical Channel | Radio Frame 0 | Radio Frame 1 |

$\tau_{DPCH,n}$

NodeB
receiving

HS-DPCCH receiving

$t_{HS-SCCHi}$    $t_{HS-PDSCH,i}$    $\tau_{fig\_delay}$    Subframe 2    Time Axis    $t$

10.5 slots + $2\tau_{fig\_delay}$    $t_{HS}$

12.5 slots + $2\tau_{fig\_delay}$

UE
receiving

$\tau_{DPCH} + \tau_{fig\_delay}$

| UE n Dedicated Physical Channel | Radio Frame 0 | Radio Frame 1 |

$\tau_{HS-PDSH,i} + \tau_{fig\_delay}$    Subframe 2

HS-PDSCH receiving

UE
transmitting

$\tau_{DPCH,o} + \tau_{fig\_delay}$    +1024

| UE n transmitting Dedicated Physical Channel | Radio Communication Frame 0 | Radio Communication Frame 1 |

$\tau_{UEP} \approx 1920 chips$    Subframe 2

UE n transmitting HS-DPCCH

$\tau_{HS-DPCCHtoDPCH} = m \cdot 256 chips$

Fig. 2

Performance of downlink HS-SCCH demodulation is determined at NodeB side

s301

Transmit power offset parameter of downlink HS-SCCH is increased at NodeB side according to performance of downlink HS-SCCH demodulation

s302

NodeB increases transmit power of downlink HS-SCCH directly according to adjusted power offset parameter of downlink HS-SCCH

s303

Fig. 3

Performance of downlink HS-SCCH demodulation is determined at NodeB side

s401

Transmit power offset parameter of downlink HS-SCCH is decreased at NodeB side according to performance of downlink HS-SCCH demodulation

s402

NodeB decreases transmit power of downlink HS-SCCH directly according to adjusted power offset parameter of downlink HS-SCCH

s403

Fig. 4

**EP 1 860 787 B2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1467500 A2